# EUROPEAN PATENT APPLICATION

(11) **EP 0 557 932 A1**
(43) Date of publication of application: **01.09.1993**
(21) Application number: 93102772.6
(22) Date of filing: 22.02.1993
(51) Int. Cl.: G01P 3/487

(54) **Device for measuring rotational speed**

(30) Priority: 28.02.1992 IT TO920169
(71) Applicant: SKF INDUSTRIE S.P.A., I-10123 Torino (IT)
(72) Inventor: Vignotto, Angelo, I-10134 Torino (IT); Forestiero Paolo, I-10060 Airasca (TO) (IT)
(74) Representative: Lotti, Giorgio

(57) **Abstract**

The invention relates to a device for measuring the relative rotational speed of two relatively rotating members, such as the members supporting a vehicle wheel, of the type comprising a sensor or coil connected to the electronic control unit on board and magnetically coupled to a phonic wheel. This phonic wheel consists of an annular support (10), on at least one face of which there is at least one magnetized portion or sector (11) in relief relative to the remaining non-magnetized parts of the phonic wheel.

## Description

This invention falls within the field of devices for measuring the relative rotational speed of two relatively rotating members, such as members supporting a vehicle wheel. In particular, the invention relates to a device of the aforesaid type comprising a partially magnetized phonic wheel.

Special control circuits of the following types are being increasingly installed on vehicles:
- ABS type, the purpose of which is to prevent vehicle wheel locking during braking;
- ASR type, the purpose of which is to control correct vehicle traction;
- speed measurement devices such as tachometers;
- distance measurement devices such as odometers.

These measurement systems are generally provided with basic components such as a phonic wheel, measurement sensor, on-board computer, cabling and a hydraulic unit.

The phonic wheel is commonly a toothed iron ring or a magnetized ring (of rubber, plastics or sintered material). In some arrangements the phonic wheel of magnetized type is mounted via a metal or elastomer support on the rotating part to be monitored, the magnetized part of the phonic wheel facing the sensor, which is at a predetermined distance away. The sensor, of active or passive type, is installed on the fixed part of the frame. In other arrangements the phonic wheel is positioned against the sensor and is fixed therewith to a fixed part of the vehicle, whereas on the rotating part a toothed metal ring is provided which when rotated continuously varies the magnetic flux generated by the various poles of the magnetized ring, and linked with the sensor coil.

The electrical signals provided by the sensor are fed to the on-board computer which in the ABS system determines the speed differences between the wheels.

Phonic wheels (of magnetized type) are given the necessary magnetic properties by an apparatus, known as a magnetizer, which magnetizes the wheels permanently at predetermined points and with the desired polarity orientation.

An object of the invention is to provide a rotational speed measuring device which uses one or more annular phonic wheel segments, so enabling the quantity of material used to be reduced, with consequent cost reduction and simplification of the magnetizing apparatus.

The sensors and the phonic wheels are both particularly sensitive to the damaging effect of the metal particles deriving from brake wear which reach the proximity to the sensors and are magnetically attracted. Moreover these components are protected as much as possible against impact, contaminants such as dust and dirt, and other dangers of damage.

In particular, these measuring devices are negatively affected by the high temperature developed by disc brakes. In this respect, under such conditions and with long use the magnetized ring forming the phonic wheel tends to separate from its support so that it no longer functions. Instead, the phonic wheel must not be able to move relative to its seat.

A further object of the invention is therefore to provide a rotational speed measuring device free from said drawbacks and in which the phonic wheel is properly fixed to its seat so that it cannot move axially or rotatably thereto.

These and further objects and advantages, which will be more apparent hereinafter, are attained according to the invention by a device for measuring the relative rotational speed of two relatively rotating members, such as the members supporting a vehicle wheel, of the type comprising a sensor or coil connected to the electronic control unit on board and magnetically coupled to a phonic wheel, characterised in that said phonic wheel consists of an annular support, on at least one face of which there is at least one magnetized portion or sector in relief relative to the remaining non-magnetized parts of said phonic wheel.

The structural and operational characteristics of some preferred but non-limiting embodiments of the device according to the invention are described hereinafter with reference to the accompanying drawings, in which:
Figure 1 is a schematic view of a first embodiment of a phonic wheel according to the invention;
Figures 2 and 3 show two possible embodiments alternative to that of Figure 1.

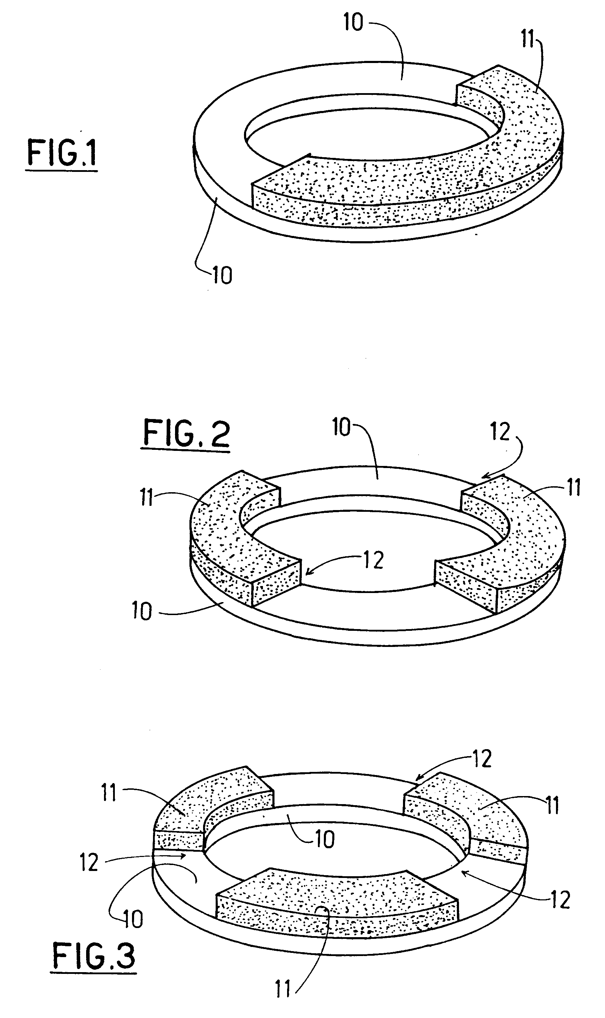

With reference to Figure 1, a phonic wheel consists of an annular support 10 of metal or elastomeric material on which, according to the invention, a magnetized sector 11 of annular segment shape is fixed. Within this sector, constructed of rubber, plastics or sintered material, there are dispersed fine iron particles able to retain the magnetic charge with which they are provided, before assembly, by a magnetizer. The magnetized sector 11 can be fixed to its support 10 by various methods, such as glueing or vulcanization.

As can be seen from the figures, in each of the different embodiments of the phonic wheel according to the invention at least one empty space or interspace 12 exists between the magnetized sectors 11. In each case the sectors 11 are in relief relative to the support 10. In this respect, as stated in the introduction, it is essential that the phonic wheel cannot move relative to its seat. For practical reasons it is difficult to securely fix a circular ring because of the lack of holds. In contrast, the phonic wheel according to the invention can easily be inserted into a further plastics support (not shown for simplicity) and then locked to this support, when mounted, by casting plastics material into the interspaces 12 to obtain as the final result a phonic wheel in the form of a solid ring securely locked to its seat.

The phonic wheel of the invention is well suitable for application to rotational speed measuring devices, both in those cases in which the wheel is applied to a rotating part of the vehicle and to those cases in which the phonic wheel and sensor coil are fixed within a flux concentrator arranged on a non-rotating part of the vehicle and facing a rotating toothed wheel. In this case the coil is positioned at the bottom of the flux concentrator, the complete magnetized ring then being positioned on it. The ends of the winding are passed between the interspace 12 between the magnetized regions 11 for connection to the electronic control unit on board. The filler plastic is then poured to obtain a compact unit little sensitive to the effects of heat and impact, and offering a reduced surface attackable by metal particles and other contaminants.

The phonic wheel according to the invention can assume various alternative configurations. Figure 1 shows the case in which there is a single magnetized sector 11 extending through an arc of 180 degrees, whereas in Figure 2 there are two magnetized sectors 11 each extending through about one quarter of a circumference and arranged symmetrical about an axis passing through the centre of the annular support 10. In Figure 3 there are three magnetized sectors 11, spaced the same angle apart for dynamic balancing reasons.

In each case the operation of the phonic wheels of the present invention is identical to that of wheels of known type in which the magnetic poles are distributed along the entire circumference. In this respect, the pole pitch remains unaltered and hence the same frequency is maintained for the signal induced in the sensor.

However as the total number of poles is reduced the signal amplitude is diminished. The sensor coil (not shown) has therefore to be adequately sized to obtain a signal of amplitude sufficient for reading.

As will be apparent a phonic wheel according to the present invention is economical to produce and is of simple and stable application to measuring devices of passive type. In addition, the fixing achieved by casting into the plastics support prevents any errors in the positioning of the phonic wheel relative to the sensor.

Although only some preferred embodiments of the device have been described and illustrated, the invention is not limited to these examples and numerous modifications, obvious to the expert of the art, can be made without leaving the scope of the invention as defined by the following claims.

## Claims

1. A device for measuring the relative rotational speed of two relatively rotating members, such as the members supporting a vehicle wheel, of the type comprising a sensor or coil connected to the electronic control unit on board and magnetically coupled to a phonic wheel, characterised in that said phonic wheel consists of an annular support (10), on at least one face of which there is at least one magnetized portion or sector (11) in relief relative to the remaining non-magnetized parts of said phonic wheel.

2. A device as claimed in claim 1, characterised in that said support (10) is formed of metal or elastomeric material, whereas said magnetized sectors (11) are formed of rubber, plastics or sintered material.

3. A device as claimed in claim 1, characterised in that said magnetized sector (11) extends through one half of the circumference of said annular support (10).

4. A device as claimed in claim 1, characterised in that there are two magnetized sectors (11) separated by interspaces (12).

5. A device as claimed in claim 1, characterised in that there are three magnetized sectors (11) separated by interspaces (12).

6. A device as claimed in the preceding claims, characterised in that each magnetized sector (11) consists of at least one annular segment, between the ends of which there is defined at least one interspace (12) through which the cables of a sensor are passed, after which it is filled with molten material.
